(19) Europäisches Patentamt
European Patent Office
Office européen des brevets

(11) **EP 4 278 019 B1**

(12) **EUROPEAN PATENT SPECIFICATION**

(45) Date of publication and mention
of the grant of the patent:
**04.02.2026 Bulletin 2026/06**

(21) Application number: **21848302.2**

(22) Date of filing: **28.12.2021**

(51) International Patent Classification (IPC):
*C21C 5/52* (2006.01)     *C21C 5/54* (2006.01)
*C22B 1/244* (2006.01)     *C22B 1/243* (2006.01)
*C22B 1/248* (2006.01)

(52) Cooperative Patent Classification (CPC):
**C21C 5/527; C21C 5/54; C22B 1/243; C22B 1/244;
C22B 1/248;** C21C 2005/5276; C21C 2005/5282;
Y02P 10/20

(86) International application number:
**PCT/IT2021/050434**

(87) International publication number:
**WO 2022/153342 (21.07.2022 Gazette 2022/29)**

(54) **SOLID AGGLOMERATED PRODUCT BASED ON IRON OXIDES AND CORRESPONDING PRODUCTION METHOD**

FESTES AGGLOMERIERTES PRODUKT AUF BASIS VON EISENOXIDEN UND VERFAHREN ZU SEINER HERSTELLUNG

PRODUIT SOLIDE AGGLOMÉRÉ À BASE D'OXYDES DE FER ET PROCÉDÉ DE FABRICATION CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.01.2021 IT 202100000386**

(43) Date of publication of application:
**22.11.2023 Bulletin 2023/47**

(73) Proprietor: **Danieli & C. Officine Meccaniche
S.p.A.
33042 Buttrio (IT)**

(72) Inventors:
• **TOMMASI, Luca
34077 RONCHI DEI LEGIONARI (IT)**
• **TIBURZIO, Selena
33052 CERVIGNANO DEL FRIULI (IT)**

(74) Representative: **Petraz, Gilberto Luigi et al
GLP S.r.l.
Viale Europa Unita, 171
33100 Udine (IT)**

(56) References cited:
EP-A1- 3 760 748     WO-A1-2020/065691
RU-C1- 2 183 679     US-A1- 2001 047 699

**Description**

FIELD OF THE INVENTION

The present invention concerns solid agglomerated products based on iron oxides and a corresponding production method.

In particular, the agglomerated products in accordance with the present invention can be used to feed electric arc furnaces, to recover the iron contained therein.

BACKGROUND OF THE INVENTION

In the steel and metallurgical fields, different types of by-products of iron processing and steel production are known, generally considered as industrial offcuts or waste.

Most of these by-products comprise iron oxides, as well as other fine particles and residues.

By way of example only, these processing residues can be fine particles from iron oxide pelletizing plants, blast furnace powders, powders and fine particles from steel plants, mill scale, coal dust, fine particles from coke furnaces, fine particles from direct reduction plants.

These by-products, according to their size, can generally be grouped into two macro groups:

- a fine fraction with a granulometry smaller than 100 $\mu$m, generally referred to as powders, usually recovered by depulverizing systems;
- a coarse fraction with a granulometry comprised between 100$\mu$m and 8mm.

These by-products are normally considered waste products of steel and mining plants and have to be managed as waste, with high operating costs.

Another disadvantage is the difficulty of collecting, transporting and moving these by-products, due to the small granulometry.

Furthermore, the presence of high quantities of these by-products represents a huge loss of yield of the steel plant due to the high amount of iron they contain.

Methodologies and plants for the recovery of by-products deriving from metallurgical plants are also known which, starting from said by-products based on iron oxides and combining the by-products with a reducing agent, and possible additional additives or by-products, provide to produce agglomerated products such as pellets and/or briquettes which are easier to manage, transport and move.

These agglomerated products, if brought to determinate temperatures and under determinate conditions, can initiate reduction reactions in which the iron oxides are reduced to metallic iron which can be recovered.

Usually, these agglomerated products are used to feed reactors for the production of iron, such as blast furnaces, or direct reduction plants.

However, these methods are not very efficient and do not guarantee an efficient recovery of the metallic iron present in the iron oxides of the by-products if the latter are subsequently used as the charge material for traditional electric arc furnaces.

Another problem of known agglomerated products has been found, namely that they are damaged when they are rubbed against each other, for example during a transport step. This rubbing causes the formation of dust, a consequence of the wear on the surface of the agglomerated products.

WO-A1-2020/065691 describes a solid agglomerated product usable as charge material for a furnace and comprising at least a fraction of a by-product deriving from a steel plant and comprising ferrous oxide FeO and ferric oxide $Fe_2O_3$ in two distinct parts, a fraction of solid fuel containing carbon and at least one inorganic binder to agglomerate the by-product and the solid fuel together. The quantity of fraction of solid fuel present in the agglomerated product is connected to the quantity of ferrous oxide and ferric oxide present in the agglomerated product itself. This document does not provide any organic binder.

US-A1-2001/047699 describes an agglomerated product based on by-products containing iron, comprising cellulose fibers as a binder at 0.5-2.0% by weight on the total weight of the agglomerated product, and a reducing compound. The addition of water up to 5% by weight promotes the action of the cellulose as a binder and makes the agglomerated product more solid. An inorganic binder is not provided, and the presence of fuel in the agglomerated product is not mentioned.

RU-C1-2183679 describes a briquette containing a material based on iron oxide, a fuel, a binder, an alloy-forming additive and a plasticizer. The binder is more than 10% by weight on the weight of the briquette and can be either of the inorganic type, in particular cement, or of the organic type, in particular alcohol sulfide vinasse or lignosulfonate. This document does not provide the joint presence of an inorganic binder and an organic binder. Furthermore, it does not mention any relationship between the quantity of fuel and the quantity of iron oxide.

One purpose of the present invention is to provide agglomerated products based on iron oxides with increased mechanical characteristics that can be easily moved, stored and transported.

It is also a purpose of the present invention to provide an agglomerated product which can be used efficiently and with high yields also as a charge material for electric arc furnaces.

Another purpose of the present invention is to recover both the fine fraction and the coarse fraction of the by-products of iron processing for the production of agglomerated products based on iron oxide, so as to reduce their dispersion into the environment and reduce waste material by optimizing the resources available.

It is also a purpose of the present invention to provide agglomerated products based on iron oxides which optimize the reduction reaction by the reducing agent, with consequent maximization of the metallic iron obtainable from the iron oxides present in the by-products.

Another purpose of the present invention is to provide agglomerated products which do not disintegrate when they are rubbed together, in particular during transport.

The Applicant has devised, tested and embodied the present invention to overcome the shortcomings of the state of the art and to obtain these and other purposes and advantages.

SUMMARY OF THE INVENTION

The present invention is set forth and characterized in the independent claims. The dependent claims describe other characteristics of the present invention or variants to the main inventive idea.

In accordance with the above purposes, a solid agglomerated product, according to the present invention, such as a briquette, can be used as charge material for an electric arc furnace.

The solid agglomerated product comprises:

- at least one by-product fraction deriving from a steel plant and comprising a first part containing ferrous oxide FeO and a second part containing ferric oxide $Fe_2O_3$;
- a solid fuel fraction containing a quantity of carbon C_fix;
- at least one inorganic binder to agglomerate the at least one by-product fraction and the solid fuel fraction together and give the agglomerate the necessary mechanical properties;
- at least one organic binder to agglomerate the at least one by-product fraction and the solid fuel fraction together and give the necessary plasticity to the product.

The organic binder is advantageously a polymer capable of absorbing water and capable of swelling, giving plasticity. By plasticity, we mean the ability to undergo permanent deformations.

The inorganic binder has the function of giving the product (briquette or pellet) properties of hardness and resistance, while the organic binder gives plasticity and makes transporting the product practical, since it prevents its disaggregation. Advantageously, the inorganic binder is selected from cement, white slag and a mixture thereof.

According to the present invention, the solid fuel fraction is present in a quantity by weight determined by the relation CR=K*CS/C_fix, wherein:

K: is a constant comprised between 1.0 and 2.5;
CS: is a quantity by weight of stoichiometric carbon defined by the relation $CS=0.11*(Fe^{2+}\_tot)+0.16*(Fe^{3+}\_tot)$, where $Fe^{2+}\_tot$ is a quantity by weight of iron contained in the first part, and $Fe^{3+}\_tot$ is a quantity by weight of iron contained in the second part.

The at least one organic binder is selected from among polysaccharides and is present in a percentage by weight comprised between 2% and 5% with respect to said at least one by-product fraction.

The solid agglomerated product based on iron oxides, as defined above, can be used directly as charge material for an electric arc furnace to recover the iron contained therein. This product is not reintroduced into reduction reactors, blast furnaces, iron direct reduction plants (DRPs) or suchlike, as normally occurs in the state of the art.

Thanks to the particular composition, and in particular to the quantity of carbon present in the agglomerated product, it is possible to obtain a selfreducing product which, once inserted in the electric arc furnace, is reduced to metallic iron thanks to the high temperatures present and can be recovered as liquid metal, increasing the overall yield of the melt.

The solid agglomerated product based on iron oxides can also be used in an electric arc furnace that uses scrap or iron obtained by direct reduction (DRI) as the charge material.

Furthermore, the solid agglomerated product allows to recover by-products or residues of ferrous fractions from different production processes in the steel industry, for example from smoke plants or direct reduced iron plants, and reuse them directly in the same production site where these by-products were generated.

This considerably simplifies the management of these by-products, which are no longer considered as waste residues but as another source of iron.

The present invention also concerns a method for making a solid agglomerated product comprising:

- making available at least one by-product fraction comprising a first part containing ferrous oxide FeO and a second part containing ferric oxide $Fe_2O_3$;
- making available a solid fuel fraction containing a quantity of carbon C_fix;
- mixing at least the by-product fraction with the solid fuel fraction and with at least one inorganic binder and at least one organic binder, in order to obtain the solid agglomerated product.

In accordance with some embodiments, before being mixed together, the reactants are added in sequence, according to a pre-established order, preferably determined by the granulometry and/or hygroscopicity of the reactants.

In particular, the method provides to proceed, preferentially, with making available the oxides in a first step. Advantageously, the agglomeration of the dry additives follows, namely the carbon and the organic binder, preferably uniform with respect to each other in terms of granulometry. Then follows the addition of the additives that react in the presence of water, namely the inorganic binder and the white slag. Finally, water is added to amalgamate the components. More precisely, these additives have a hydration reaction with water, that is, they are hygroscopic.

The mixing can occur with a mixer, preferably equipped with sensors able to detect the state of the mixing between the components, for example by emitting microwaves that allow to evaluate the distribution of water with respect to the composition matrix of the material.

The agglomeration time of all the different components is preferably less than 15 minutes, even more preferably less than 10 minutes.

According to the present invention, before mixing the method comprises determining a quantity by weight of the solid fuel fraction, by means of the relation CR=K*CS/C_fix, wherein:

K: is a constant comprised between 1.0 and 2.5;
CS: is a quantity by weight of stoichiometric carbon defined by the relation CS=0.11*($Fe^{2+}$_tot)+0.16*($Fe^{3+}$_tot), where $Fe^{2+}$_tot is a quantity by weight of iron contained in the first part, and $Fe^{3+}$_tot is a quantity by weight of iron contained in the second part.

The at least one organic binder is selected from among polysaccharides and is present in a percentage by weight comprised between 2% and 5% with respect to said at least one by-product fraction.

BRIEF DESCRIPTION OF THE DRAWINGS

These and other aspects, characteristics and advantages of the present invention will become apparent from the following description of some embodiments, given as a non-restrictive example with reference to the attached drawings wherein:

- fig. 1 is a schematic representation of a method for making a solid agglomerated product based on iron oxides in accordance with the present invention;
- fig. 2 is a schematic representation of a variant of the method for making the solid agglomerated product based on iron oxides in accordance with the present invention; and
- fig. 3 is a schematic representation of a step of the method of fig. 2.

To facilitate comprehension, the same reference numbers have been used, where possible, to identify identical common elements in the drawings. It is understood that elements and characteristics of one embodiment can be conveniently combined or incorporated into other embodiments without further clarifications.

DETAILED DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

In accordance with some embodiments of the present invention, the solid agglomerated product, in accordance with the present invention, comprises:

- at least one by-product fraction, which will be indicated below with the following references: M, M1, M2, M3; and which comprises a first part containing ferrous oxide FeO and a second part containing ferric oxide $Fe_2O_3$;
- a solid fuel fraction CR containing a quantity of carbon C_fix;
- at least one inorganic binder to agglomerate the at least one by-product fraction M; M1, M2, M3 and the solid fuel fraction CR together, and give the agglomerate the necessary mechanical properties;
- at least one organic binder to agglomerate the at least one by-product fraction M; M1, M2, M3 and the solid fuel fraction CR together, and give the agglomerate the necessary plasticity.

The at least one by-product fraction M; M1, M2, M3 can also comprise a third part containing metallic iron Fe. The by-product fraction M; M1, M2, M3 is suitably mixed and combined with the solid fuel fraction CR, in order to obtain the agglomerated product which can be used as material to feed an electric arc furnace, or possibly for other types of steel plants.

According to one possible embodiment, the solid fuel fraction can be selected from a group comprising anthracite, coke, breeze, pet coke or other fuels deriving from industrial processes, or suchlike, preferably with a suitable fineness.

In accordance with one aspect of the present invention, the quantity of carbon C_fix is the percentage of non-volatile, that is, fixed carbon present in the solid fuel fraction. This quantity of carbon C_fix can be determined as the ratio between the weight of non-volatile carbon and the total weight of the fuel which contains this quantity of carbon.

According to possible embodiments of the invention, the quantity of carbon C_fix can be measured by means of experimentation and/or known detection methods.

The quantity of carbon C_fix contained in the solid fuel fraction CR acts as a reducing agent by subtracting oxygen from the first part containing ferrous oxide FeO and from the second part containing ferric oxide $Fe_2O_3$.

In particular, the reduction reactions of the ferrous oxide FeO and ferric oxide $Fe_2O_3$ are described by the following relations:

$$2Fe_2O_3 + 3C = 4Fe + 3CO_2(g)$$

$$2FeO + C = 2Fe + CO_2(g)$$

$$Fe_2O_3 + 3C = 2Fe + 3CO(g)$$

$$FeO + C = Fe + CO(g)$$

The products of the reduction reactions are metallic iron Fe and carbon oxides in gaseous form.

From these relations it is possible to determine the quantity by weight of stoichiometric carbon CS necessary for a correct and balanced reduction reaction:

$$CS = (Fe^{2+}\_tot) * 1/2 * (PM\_C/PM\_Fe) + (Fe^{3+}\_tot) * 3/4 * (PM\_C/PM\_Fe)$$

wherein:

$Fe^{2+}$_tot: is a quantity by weight of iron contained in the first part containing ferrous oxide FeO;
$Fe^{3+}$_tot: is a quantity by weight of iron contained in the second part containing ferric oxide $Fe_2O_3$;
PM_C: is the atomic weight of carbon C, equal to 12;
PM_Fe: is the atomic weight of iron Fe equal to 55.8.

Consequently, the stoichiometric reduction reaction as above can be simplified and approximated as follows:

$$CS = 0.11 * (Fe^{2+}\_tot) + 0.16 * (Fe^{3+}\_tot)$$

In accordance with one aspect of the present invention, it is provided that the solid fuel fraction CR which is provided in the agglomerated product is present in a quantity by weight determined by the relation CR=K*CS/C_fix, wherein:

K: is a constant comprised between 1.0 and 2.5, preferably between 1.2 and 2.5, more preferably between 1.3 and 1.6;
CS: is a quantity by weight of stoichiometric carbon CS as defined above.

The constant K represents an addition of carbon in the solid fuel fraction, to compensate for the thermal extraction corresponding to the reduction of the iron oxide. This reaction is endothermic, and therefore requires heat to occur. To prevent the heat from being absorbed in its entirety by the bath in which the reaction occurs, which would significantly increase the melting time and the corresponding absorbed electrical power, the Applicant has chosen to supply a portion of the heat useful for the reaction chemically, that is, by oxidation of the carbon. One advantage related to this choice is that the energy is released locally, that is, inside the agglomerate itself and is therefore immediately available for the reduction reaction.

The quantity of carbon to be added represented by the constant K, with respect to the stoichiometric quantity, is determined on the basis of enthalpy calculations which allow to calculate the heat absorbed by the reaction, which allows to determine an optimal quantity of carbon to be added.

It has been observed that with a K greater than 2.5, the added carbon is in excess, and this increases the costs of the process as well as the emissions, without achieving a corresponding advantage. If, on the other hand, the constant K is less than 1, there is a lack of quantity of carbon and therefore a heat deficit.

This correlation on the quantity of the solid fuel fraction CR present in each agglomerated product allows the appropriate balance between the quantity of solid fuel and the quantity of iron oxides, whether these are FeO or $Fe_2O_3$. Furthermore, the correlation as above allows to determine the quantity of solid fuel fraction that has to be present inside the agglomerated product, necessary to supply, during melting in an electric arc furnace, an energy contribution able to favor the reduction kinetics.

The agglomerated product thus obtained can therefore be used directly as the charge product for an electric arc furnace since, thanks to its balance between reducing agent and iron oxides, it receives part of the energy necessary for its reduction from the fuel itself, for the production of liquid metal.

According to another embodiment, the quantity of solid fuel fraction CR is less than or equal to 30% by weight with respect to the at least one by-product fraction M; M1, M2, M3. This value of solid fuel CR is a good compromise between the ease of obtaining the agglomerated product and the production cost thereof.

According to another embodiment, the quantity of solid fuel fraction CR is less than or equal to 25% by weight with respect to the total weight of the solid agglomerated product.

In accordance with one possible embodiment of the present invention, the inorganic binder is selected from a group consisting of cement, white slag, or a combination thereof.

According to one possible solution, the inorganic binder comprises cement, preferably in a percentage by weight comprised between 4% and 10%, preferably between 5% and 7%, with respect to the at least one by-product fraction M; M1, M2, M3.

In other solutions, the inorganic binder is present in a percentage by weight comprised between 4% and 10%, preferably between 5% and 7%, with respect to the at least one by-product fraction M; M1, M2, M3. Preferably, the inorganic binder comprises or is cement.

In accordance with possible solutions, the cement can comprise Portland cement, preferably type III.

According to the invention, the organic binder is selected from among polysaccharides. Preferably, the organic binder is selected from starch, carboxymethylcellulose, lignin and a mixture of two or more of these.

More preferably, the organic binder comprises starch, even more preferably in a percentage by weight comprised between 2% and 5%, preferably between 2.5% and 4%, with respect to the at least one by-product fraction M; M1, M2, M3.

Still according to the invention, the organic binder is present in a percentage by weight comprised between 2% and 5%, preferably between 2.5% and 4%, with respect to the at least one by-product fraction M; M1, M2, M3. More preferably, the organic binder comprises or is starch.

In accordance with another solution of the present invention, the inorganic binder comprises, alternatively or in addition to the cement, white slag. The white slag is advantageously present in a percentage by weight comprised between 2% and 10%, preferably between 5% and 9%, with respect to the at least one by-product fraction M; M1, M2, M3.

White slag can be defined as the slag that is obtained as waste from secondary metallurgy processes, for example the steel refining processes that are usually implemented inside the ladle. The term white slag is widely used in the technical field of metallurgy, and is to be considered well known to the person of skill in the art.

The addition of white slag during the step of producing the solid agglomerated product advantageously allows to improve the mechanical properties of the agglomerate itself, creating an acicular-type structure of hydrated calcium silicate, and to increase the hygroscopicity of the agglomerate itself in order to retain the water necessary for the hydration of the main inorganic binder, for example cement.

Furthermore, the addition of white slag allows to reduce the necessary quantity of main inorganic binder, that is, cement, and to modulate the basicity of the slag in the furnace, possibly reducing the additions of slagging agents.

In accordance with possible solutions, the agglomerated product can comprise at least one additive selected from a group comprising calcium oxide CaO, also called "quicklime", and calcium carbonate $CaCO_3$.

According to one possible solution, the solid agglomerated product, in accordance with the present invention, does not contain bentonite and/or binders of the molasses type as main binders.

These materials, in fact, give the agglomerated product poor mechanical properties if it is brought to temperatures above 400°C. It is also a possible purpose of the present invention to obtain an agglomerated product which preserves its characteristics of mechanical resistance at temperatures higher than 400°C, preferably higher than 600°C. This makes it possible, for example, to add these aggregate products to the preheated direct reduction iron, usually at temperatures of about 600°C. It should be noted that bentonite and molasses do not have the correct water absorption and/or swelling properties useful for giving elasticity to the agglomerated product.

Preferably, the solid agglomerated product is in the form of a pressed product, such as for example an extrudate or with a non-circular shape. More preferably, the agglomerated product is in the form of briquettes B. The briquettes B can have sizes comprised between 20mm and 60mm and a weight comprised between 15g and 1500g.

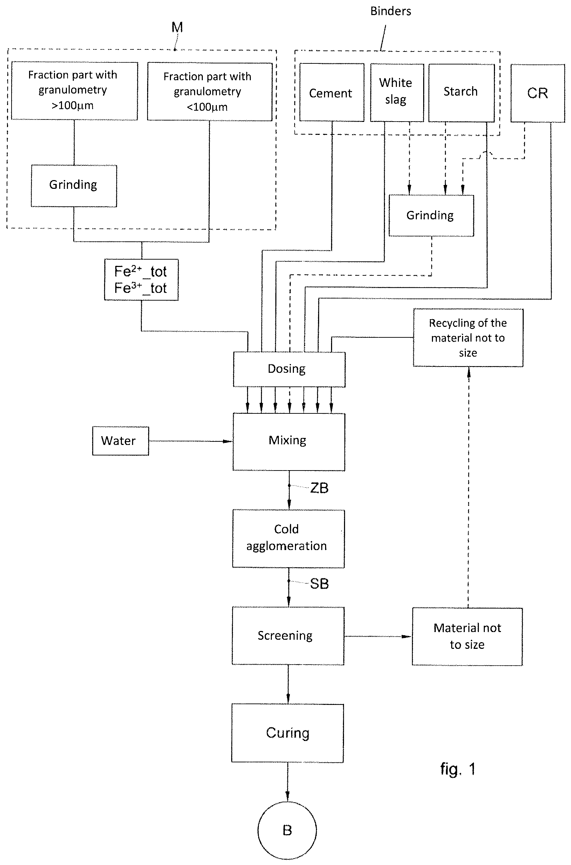

Fig. 1 shows a method for making the solid agglomerated product, in which it is provided to use a single by-product fraction M having a granulometry smaller than $100\mu m$.

This single by-product fraction M can be supplied by a single zone of the steel plant in which this fraction was produced, or derive from different parts of a steel plant.

Furthermore, it can be provided that the single by-product fraction M is also derived from a previous process of grinding and mixing several by-product fractions having much larger granulometries than those used for the present process.

Preferably, it is provided that at least 50% of this by-product fraction M has a granulometry smaller than $25\mu m$.

According to one variant, it is provided that at least 80% of this by-product fraction M has a granulometry smaller than $45\mu m$.

In accordance with this solution, it can be provided that in the event that at least part of this by-product fraction has a granulometry larger than $100\mu m$, this part, or the entire by-product fraction, is subjected to a grinding process in order to obtain the desired granulometry sizes.

Subsequently, the method provides to determine, for example by means of laboratory tests, the quantity $Fe^{2+}\_tot$ by weight of iron contained in the first part containing ferrous oxide FeO, and of the quantity $Fe^{3+}\_tot$ by weight of iron contained in the second part containing ferric oxide $Fe_2O_3$.

By way of example only, it can be provided that the weight of the quantity $Fe^{2+}\_tot$ and of the quantity $Fe^{3+}\_tot$ are determined by the relations:

$$Fe^{2+}\_tot = \%Fe^{2+}{}_M * M$$

$$Fe^{3+}\_tot = \%Fe^{3+}{}_M * M.$$

Wherein M is the weight of the by-product fraction and $\%Fe^{2+}{}_M$ and $\%Fe^{3+}{}_M$ are the respective percentages of iron $Fe^{2+}$, $Fe^{3+}\_present$ in the by-product fraction.

According to some embodiments, $\%Fe^{2+}{}_M$ and $\%Fe^{3+}{}_M$ can be measured by experimentation and/or detection methods.

According to one possible solution, it can be provided that the by-product fraction M has a degree of metallization, that is, a degree of metallic iron, with respect to the total iron, comprised between 15% and 40%.

In accordance with one possible solution, it is then provided to prepare at least the solid fuel fraction CR, at least one inorganic binder and at least one organic binder. The quantity of solid fuel fraction CR is determined according to the relations described above.

In accordance with one possible solution, these binders, or part of them, and the solid fuel fraction CR, or part of it, can be subjected to a grinding process in order to reduce their granulometry, for example to a value smaller than $100\mu m$.

Subsequently, the by-product fraction, the binders and the solid fuel fraction CR are mixed together with the addition of water in order to obtain a mixture ZB.

According to one embodiment, before the mixing, a dosing of the at least one inorganic binder, the solid fuel fraction CR and the by-product fraction M can be performed.

The production method then provides the cold agglomeration of the mixture ZB in order to obtain agglomerates SB. The cold agglomeration can be performed by pressing, for example with the aid of a mechanical compaction cycle at high pressures.

Subsequently, the method can comprise a screening step during which the agglomerates SB are screened, keeping only those that have a determinate size.

The agglomerates SB with smaller sizes than those desired are recycled, for example by introducing them into the mixer, during the mixing step or in the compactor.

Following the screening, the method can comprise a curing step. During this curing step the agglomerates SB acquire the desired mechanical characteristics thanks also to the hydration reactions that occur between the binders, for example between cement and white slag.

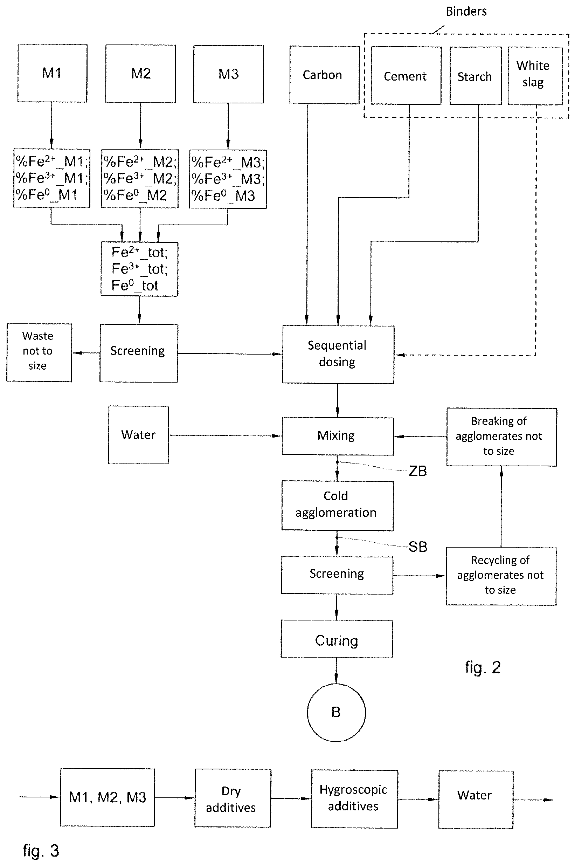

According to one variant, the production method schematically shown in fig. 2 provides to supply at least two by-product fractions, in this specific case three by-product fractions M1, M2 and M3, and wherein at least a first by-product fraction M1 has a granulometry smaller than 100μm, and a second by-product fraction, in this specific case a second and a third by-product fraction M2 and M3, has a granulometry comprised between 100μm and 6mm, preferably between 100μm and 4mm for at least 80% of the by-product itself.

Preferably, it is provided that at least 50% of the first by-product fraction M1 has a granulometry smaller than 25 μm.

According to one possible solution, it can be provided that the first by-product fraction M1 has a degree of metallization, that is, a degree of reduction of the iron oxides (FeO and/or $Fe_2O_3$) to metallic iron comprised between 15% and 40%.

According to another embodiment, it can be provided that the second by-product fraction M2 has a degree of metallization, that is, a degree of reduction of iron oxides (FeO and/or $Fe_2O_3$) to metallic iron lower than 6%.

In accordance with another embodiment, it can be provided that the third by-product fraction M3 has a degree of metallization, that is, a degree of reduction of iron oxides (FeO and/or $Fe_2O_3$) to metallic iron comprised between 70% and 100%.

In accordance with possible implementations of the method, it is then provided to determine, for all the by-product fractions M1, M2, M3, for example by means of laboratory tests, the quantity of $Fe^{2-}$_tot by weight of iron contained in the first part containing ferrous oxide FeO, the quantity $Fe^{3+}$_tot by weight of iron contained in the second part containing ferric oxide $Fe_2O_3$, and the quantity $Fe^0$_tot by weight of iron contained in the third part containing metallic iron Fe.

This determination can be performed separately for each of the by-product fractions M1, M2, and M3.

By way of example only, for the example case in which there are three by-product fractions, it is provided to determine, for example by means of laboratory tests, respective percentages of iron $Fe^{2+}$, $Fe^{3+}$, $Fe^0$ present in each by-product fraction, that is, the determination of $\%Fe^{2+}_{M1}$, $\%Fe^{3+}_{M1}$, $\%Fe^0_{M1}$, $\%Fe^{2+}_{M2}$, $\%Fe^{3+}_{M2}$, $\%Fe^0_{M2}$, $\%Fe^{2+}_{M3}$, $\%Fe^{3+}_{M3}$, $\%Fe^0_{M3}$.

As a function of these percentages of iron $Fe^{2+}$, $Fe^{3+}$, $Fe^0$ it is possible to determine the weights of the quantity $Fe^{2+}$_tot, of the quantity $Fe^{3+}$_tot and of the quantity $Fe^0$_tot by means of the relations:

$$Fe^{2+}\_tot = \%Fe^{2+}_{M1}*M1 + \%Fe^{2+}_{M2}*M2 + \%Fe^{2+}_{M3}*M3$$

$$Fe^{3+}\_tot = \%Fe^{3+}_{M1}*M1 + \%Fe^{3+}_{M2}*M2 + \%Fe^{3+}_{M3}*M3$$

$$Fe^0\_tot = \%Fe^0_{M1}*M1 + \%Fe^0_{M2}*M2 + \%Fe^0_{M3}*M3.$$

These quantities by weight are then used to determine the weight of the solid fuel fraction CR to be added in order to obtain the briquettes B.

According to some embodiments, it is also provided to screen the by-product fractions M1, M2, M3 in order to discard the components that do not satisfy a determinate size criterion. This screening is optional.

It is provided to supply the at least one inorganic binder that binds the by-product fractions M1, M2, M3 and the solid fuel fraction CR together.

It is provided to supply the at least one organic binder that binds the by-product fractions M1, M2, M3 and the solid fuel fraction CR together.

It can also be provided that the binders, or part of them, and the solid fuel fraction CR, or part of it, can be subjected to a crushing process in order to reduce their granulometry, for example to a value smaller than 4mm.

Subsequently, the by-product fractions M1, M2 and M3, the binders and the solid fuel fraction CR are mixed together, preferably according to a suitable sequence established by the respective granulometry and/or hygroscopicity, that is, the ability to react with water, with the addition of water in order to obtain a mixture ZB (fig. 3).

For example, it can be provided to mix, in a first step, dry products such as the by-product fractions M; M1, M2, M3, the organic binder and the solid fuel. Subsequently, it is provided to add the hygroscopic components, that is, those that react with water, such as the inorganic binder.

More preferably, first the by-product fractions M; M1, M2, M3 and then the organic binder are made available.

According to one embodiment, before the mixing, a dosing of the at least one inorganic binder, the at least one organic binder, the solid fuel fraction CR and the by-product fractions M1, M2, M3 can be performed.

The method for making briquettes B then provides the agglomeration or cold briquetting of the mixture ZB in order to obtain agglomerates SB.

The cold agglomeration can be performed by means of pressing, for example with the aid of a mechanical compaction cycle at high pressures.

By way of example only, the mixture ZB can be fed into the space between two counter-rotating rollers. The rollers are provided with molds in their surface. When the mixture ZB passes between the rollers, the material is compacted and the briquettes are formed with the desired shapes and sizes.

Subsequently, the method can comprise a screening step during which briquettes at exit from the cold agglomeration are screened, keeping only those that have a determinate size.

The briquettes with smaller sizes than the desired ones, typically 12mm, are recycled, for example by introducing them into a suitable lump breaker in order to crumble them and promote their subsequent agglomeration, during the mixing step or at the briquetting machine.

After the screening, the method can comprise a curing step. During this curing step the briquettes B take on the desired mechanical properties, thanks also to the hydration reactions that are established between the binders, for example between cement and white slag. This curing period varies from a minimum of 48 hours up to 96 hours and allows adequate mechanical properties to develop.

Favorably, in the formulation of the agglomerated products in accordance with the invention, the by-product fractions M, M1, M2, M3 represent between 60% and 90%, preferably between 65% and 80% by weight, dry weight. The weight ratio between the organic binder and the inorganic binder is preferably less than 1. If the white slag is present, it represents less than 10% by weight of the agglomerated product, dry weight.

The table shows some examples of formulations of solid agglomerated products as a percentage by weight, dry weight, that is, without the addition of water.

| Iron oxides% | Solid fuel fraction% | Cement% | Starch% | White slag% |
|---|---|---|---|---|
| 69 | 17.2 | 5.2 | 4.0 | 8.5 |
|  |  |  |  |  |

In accordance with another aspect of the present invention, it is provided that after curing, the briquettes B have a compressive strength, that is, a compression weight that supports the briquette before collapsing, greater than 400 N/briquette, in particular between 400 and 600 N/briquette.

It is clear that modifications and/or additions of parts may be made to the solid agglomerated product as described heretofore, without departing from the field and scope of the present invention as defined by the claims.

In the following claims, the sole purpose of the references in brackets is to facilitate reading and they must not be considered as restrictive factors with regard to the field of protection claimed in the specific claims.

**Claims**

1. Solid agglomerated product, such as a briquette (B), which can be used as charge material for an electric arc furnace, said solid agglomerated product comprising:

   - at least one by-product fraction (M; M1, M2, M3) deriving from a steel plant and comprising a first part containing ferrous oxide FeO and a second part containing ferric oxide $Fe_2O_3$;
   - a solid fuel fraction (CR) containing a quantity of carbon (C_fix);
   - at least one inorganic binder to agglomerate said at least one by-product fraction (M; M1, M2, M3) and said solid fuel fraction (CR) together;
   - at least one organic binder to agglomerate said at least one by-product fraction (M; M1, M2, M3) and said solid fuel fraction (CR) together;

   wherein said solid fuel fraction (CR) is present in a quantity by weight determined by the relation CR=K*CS/C_fix, wherein:

   K: is a constant comprised between 1.0 and 2.5;
   CS: is a quantity by weight of stoichiometric carbon defined by the relation CS=0.11*($Fe^{2+}$_tot)+0.16*($Fe^{3+}$_tot), where $Fe^{2+}$_tot is a quantity by weight of iron contained in said first part, and $Fe^{3+}$_tot is a quantity by weight of iron contained in said second part;
   said solid agglomerated product being **characterized in that** the at least one organic binder is selected from among polysaccharides, **and in that** said organic binder is present in a percentage by weight comprised between 2% and 5% with respect to said at least one by-product fraction (M; M1, M2, M3).

2. Product as in claim 1, **characterized in that** the at least one inorganic binder is selected from a group consisting of cement, white slag, or a combination thereof.

3. Product as in claim 2, **characterized in that** the at least one inorganic binder is present in a percentage by weight comprised between 4% and 10%, preferably between 5% and 7%, with respect to said at least one by-product fraction (M; M1, M2, M3).

4. Product as in claim 2 or 3, **characterized in that** the at least one inorganic binder comprises cement.

5. Product as in claim 1, **characterized in that** the at least one organic binder comprises starch.

6. Product as in claim 2, **characterized in that** the at least one inorganic binder comprises white slag and is present in a percentage by weight comprised between 2% and 10%, preferably between 5% and 9%, with respect to said at least one by-product fraction (M; M1, M2, M3).

7. Product as in any claim hereinbefore, **characterized in that** it is in the form of a briquette (B).

8. Method for making a solid agglomerated product comprising:

- making available at least one by-product fraction (M; M1, M2, M3) comprising a first part containing ferrous oxide FeO and a second part containing ferric oxide $Fe_2O_3$;
- making available a solid fuel fraction (CR) containing a quantity of carbon (C_fix);
- mixing at least said by-product fraction (M; M1, M2, M3) with said solid fuel fraction (CR) and with at least one inorganic binder and with at least one organic binder,

wherein, before said mixing, it comprises determining a quantity by weight of said solid fuel fraction (CR) by means of the relation CR=K*CS/C_fix, wherein:

K: is a constant comprised between 1.0 and 2.5;
CS: is a quantity by weight of stoichiometric carbon defined by the relation CS=0.11*($Fe^{2+}$_tot)+0.16*($Fe^{3+}$_tot), where $Fe^{2+}$_tot is a quantity by weight of iron contained in said first part, and $Fe^{3+}$_tot is a quantity by weight of iron contained in said second part;
said method being **characterized in that** the at least one organic binder is selected from among polysaccharides, **and in that** said organic binder is present in a percentage by weight comprised between 2% and 5% with respect to said at least one by-product fraction (M; M1, M2, M3).

9. Method as in claim 8, **characterized in that** the at least one inorganic binder is selected from a group consisting of cement, white slag, or a combination thereof.

10. Method as in claim 8 or 9, **characterized in that** during the mixing step the reactants are added in sequence according to an order based on their granulometry and/or their hygroscopicity.

11. Method as in claim 10, **characterized in that** first the solid reactants are made available, and then the reactants that react in contact with water.

12. Method as in claim 11, **characterized in that,** among the solid reactants, the by-product fractions (M; M1, M2, M3) are added first and the solid fuel and the organic binder are added subsequently.

**Patentansprüche**

1. Festes agglomeriertes Produkt, wie etwa ein Brikett (B), das als Einsatzmaterial für einen elektrischen Lichtbogenofen verwendet werden kann, wobei das feste agglomerierte Produkt aufweist:

- zumindest eine Nebenproduktfraktion (M; M1, M2, M3), die aus einem Stahlwerk stammt und einen ersten Teil, der Eisenoxid FeO enthält, und einen zweiten Teil, der Eisenoxid $Fe_2O_3$ enthält, aufweist;
- eine feste Brennstofffraktion (CR), die eine Menge an Kohlenstoff (C_fix) enthält;
- zumindest ein anorganisches Bindemittel, um die zumindest eine Nebenproduktfraktion (M; M1, M2, M3) und die feste Brennstofffraktion (CR) miteinander zu agglomerieren;
- zumindest ein organisches Bindemittel, um die zumindest eine Nebenproduktfraktion (M; M1, M2, M3) und die feste Brennstofffraktion (CR) miteinander zu agglomerieren;

wobei die feste Brennstofffraktion (CR) in einer Menge nach Gewicht vorliegt, die durch die Beziehung CR = K*CS/C_fix bestimmt ist, wobei:

K: eine Konstante ist, die zwischen 1.0 und 2.5 liegt;
CS: eine Menge nach Gewicht von stöchiometrischem Kohlenstoff ist, die durch die Beziehung CS=0.11* $(Fe^{2+}\_tot)+0.16*(Fe^{3+}\_tot)$ definiert ist, wobei $Fe^{2+}\_tot$ eine Menge nach Gewicht von Eisen ist, die in dem ersten Teil enthalten ist, und wobei $Fe^{3+}\_tot$ eine Menge nach Gewicht von Eisen ist, die in dem zweiten Teil enthalten ist;

wobei das feste agglomerierte Produkt **dadurch gekennzeichnet ist, dass** das zumindest eine organische Bindemittel aus Polysacchariden ausgewählt ist, **und dass** das organische Bindemittel zwischen 2% und 5% in Gewichtsprozent in Bezug auf die zumindest eine Nebenproduktfraktion (M; M1, M2, M3) vorliegt.

2. Produkt nach Anspruch 1, **dadurch gekennzeichnet, dass** das zumindest eine anorganische Bindemittel aus einer Gruppe ausgewählt ist, die Zement, weiße Schlacke, oder eine Kombination davon umfasst.

3. Produkt nach Anspruch 2, **dadurch gekennzeichnet, dass** das zumindest eine anorganische Bindemittel zwischen 4% und 10%, vorzugsweise zwischen 5% und 7%, in Gewichtsprozent in Bezug auf die zumindest eine Nebenproduktfraktion (M; M1, M2, M3) vorliegt.

4. Produkt nach Anspruch 2 oder 3, **dadurch gekennzeichnet, dass** das zumindest eine anorganische Bindemittel Zement aufweist.

5. Produkt nach Anspruch 1, **dadurch gekennzeichnet, dass** das zumindest eine organische Bindemittel Stärke aufweist.

6. Produkt nach Anspruch 2, **dadurch gekennzeichnet, dass** das zumindest eine anorganische Bindemittel weiße Schlacke aufweist und zwischen 2% und 10%, vorzugsweise zwischen 5% und 9%, in Gewichtsprozent in Bezug auf die zumindest eine Nebenproduktfraktion (M; M1, M2, M3) vorliegt.

7. Produkt nach einem der vorstehenden Ansprüche, **dadurch gekennzeichnet, dass** es in der Form eines Briketts (B) ist.

8. Verfahren zum Herstellen eines festen agglomerierten Produkts, aufweisend:

- Bereitstellen von zumindest einer Nebenproduktfraktion (M; M1, M2, M3), die einen ersten Teil, der Eisenoxid FeO enthält, und einen zweiten Teil, der Eisenoxid $Fe_2O_3$ enthält, aufweist;
- Bereitstellen einer festen Brennstofffraktion (CR), die eine Menge an Kohlenstoff (C_fix) enthält;
- Mischen von zumindest der Nebenproduktfraktion (M; M1, M2, M3) mit der festen Brennstofffraktion (CR) und mit zumindest einem anorganischen Bindemittel und mit zumindest einem organischen Bindemittel,

wobei, vor dem Mischen, das Verfahren ein Bestimmen einer Menge nach Gewicht von der festen Brennstofffraktion (CR) mittels der Beziehung CR = K*CS/C_fix aufweist, wobei:

K: eine Konstante ist, die zwischen 1.0 und 2.5 liegt;
CS: eine Menge nach Gewicht von stöchiometrischem Kohlenstoff ist, die durch die Beziehung CS=0.11* $(Fe^{2+}\_tot)+0.16*(Fe^{3+}\_tot)$ definiert ist, wobei $Fe^{2+}\_tot$ eine Menge nach Gewicht von Eisen ist, die in dem ersten Teil enthalten ist, und wobei $Fe^{3+}\_tot$ eine Menge nach Gewicht von Eisen ist, die in dem zweiten Teil enthalten ist;

wobei das Verfahren **dadurch gekennzeichnet ist, dass** das zumindest eine organische Bindemittel aus Polysacchariden ausgewählt ist, **und dass** das organische Bindemittel zwischen 2% und 5% in Gewichtsprozent in Bezug auf die zumindest eine Nebenproduktfraktion (M; M1, M2, M3) vorliegt.

9. Verfahren nach Anspruch 8, **dadurch gekennzeichnet, dass** das zumindest eine anorganische Bindemittel aus einer Gruppe ausgewählt ist, die Zement, weiße Schlacke, oder eine Kombination davon umfasst.

10. Verfahren nach Anspruch 8 oder 9, **dadurch gekennzeichnet, dass** während des Mischschritts die Reaktanten in einer Sequenz gemäß einer Reihenfolge, die auf ihrer Granulometrie und/oder ihrer Hygroskopizität basiert, zugegeben werden.

**11.** Verfahren nach Anspruch 10, **dadurch gekennzeichnet, dass** zuerst die festen Reaktanten und anschließend die Reaktanten, die bei Kontakt mit Wasser reagieren, bereitgestellt werden.

**12.** Verfahren nach Anspruch 11, **dadurch gekennzeichnet, dass,** unter den festen Reaktanten, als erstes die Nebenproduktfraktionen (M; M1, M2, M3) zugegeben werden und nachfolgend der feste Brennstoff und das organische Bindemittel zugegeben werden.

**Revendications**

**1.** Produit solide aggloméré, tel qu'une briquette (B), qui peut être utilisé en tant que matériau de charge pour un four électrique à arc, ledit produit solide aggloméré comprenant:

- au moins une fraction de sous-produit (M ; M1, M2, M3) issue d'une aciérie et comprenant une première partie contenant de l'oxyde ferreux FeO et une seconde partie contenant de l'oxyde ferrique $Fe_2O_3$ ;
- une fraction de combustible solide (CR) contenant une quantité de carbone (C_fix) ;
- au moins un liant inorganique pour agglomérer ladite au moins une fraction de sous-produit (M ; M1, M2, M3) et ladite fraction de combustible solide (CR) ensemble ;
- au moins un liant organique pour agglomérer ladite au moins une fraction de sous-produit (M ; M1, M2, M3) et ladite fraction de combustible solide (CR) ensemble ;

dans lequel ladite fraction de combustible solide (CR) est présente en une quantité en poids déterminée par la relation CR=K*CS/C_fix, dans lequel :

K : est une constante comprise entre 1.0 et 2.5 ;
CS : est une quantité en poids de carbone stœchiométrique définie par la relation CS=0.11 *$(Fe^{2+}$_tot) + 0.16* $(Fe^{3+}$_tot), dans lequel $Fe^{2+}$_tot est une quantité en poids de fer contenue dans ladite première partie, et $Fe^{3+}$_tot est une quantité en poids de fer contenue dans ladite seconde partie ;
ledit produit solide aggloméré étant **caractérisé en ce que** l'au moins un liant organique est sélectionné parmi les polysaccharides, **et en ce que** ledit liant organique est présent en un pourcentage en poids compris entre 2% et 5% par rapport à ladite au moins une fraction de sous-produit (M ; M1, M2, M3).

**2.** Produit selon la revendication 1, **caractérisé en ce que** l'au moins un liant inorganique est sélectionné dans le groupe consistant en le ciment, le laitier blanc ou une combinaison de ceux-ci.

**3.** Produit selon la revendication 2, **caractérisé en ce que** l'au moins un liant inorganique est présent en un pourcentage en poids compris entre 4% et 10%, de préférence entre 5% et 7%, par rapport à ladite au moins une fraction de sous-produit (M ; M1, M2, M3).

**4.** Produit selon la revendication 2 ou 3, **caractérisé en ce que** l'au moins un liant inorganique comprend du ciment.

**5.** Produit selon la revendication 1, **caractérisé en ce que** l'au moins un liant organique comprend de l'amidon.

**6.** Produit selon la revendication 2, **caractérisé en ce que** l'au moins un liant inorganique comprend du laitier blanc et est présent en un pourcentage en poids compris entre 2% et 10%, de préférence entre 5% et 9%, par rapport à ladite au moins une fraction de sous-produit (M ; M1, M2, M3).

**7.** Produit selon une quelconque revendication précédente, **caractérisé en ce qu'**il se présente sous la forme de briquette (B).

**8.** Procédé de fabrication d'un produit solide aggloméré comprenant :

- la mise à disposition d'au moins une fraction de sous-produit (M ; M1, M2, M3) comprenant une première partie contenant de l'oxyde ferreux FeO et une seconde partie contenant de l'oxyde ferrique $Fe_2O_3$ ;
- la mise à disposition d'une fraction de combustible solide (CR) contenant une quantité de carbone (C_fix) ;
- le mélange d'au moins ladite fraction de sous-produits (M ; M1, M2, M3) avec ladite fraction de combustible solide (CR) et avec au moins un liant inorganique et avec au moins un liant organique,

dans lequel, avant ledit mélange, il comprend la détermination d'une quantité en poids de ladite fraction de combustible solide (CR) au moyen de la relation CR=K*CS/C_fix, dans lequel :

K : est une constante comprise entre 1.0 et 2.5 ;
CS : est une quantité en poids de carbone stœchiométrique définie par la relation CS=0.11 *(Fe$^{2+}$_tot) + 0.16* (Fe$^{3+}$_tot), dans lequel Fe$^{2+}$_tot est une quantité en poids de fer contenue dans ladite première partie, et Fe$^{3+}$_tot est une quantité en poids de fer contenue dans ladite seconde partie ;
ledit procédé étant **caractérisé en ce que** l'au moins un liant organique est sélectionné parmi les polysaccharides, **et en ce que** ledit liant organique est présent en un pourcentage en poids compris entre 2% et 5% par rapport à ladite au moins une fraction de sous-produit (M ; M1, M2, M3).

9. Procédé selon la revendication 8, **caractérisé en ce que** l'au moins un liant inorganique est sélectionné dans le groupe consistant en le ciment, le laitier blanc ou une combinaison de ceux-ci.

10. Procédé selon la revendication 8 ou 9, **caractérisé en ce que** pendant l'étape de mélange, les réactifs sont ajoutés en séquence selon un ordre basé sur leur granulométrie et/ou leur hygroscopicité.

11. Procédé selon la revendication 10, **caractérisé en ce qu'**en premier lieu, les réactifs solides mis à disposition, puis les réactifs qui réagissent au contact de l'eau.

12. Procédé selon la revendication 11, **caractérisé en ce que,** parmi les réactifs solides, les fractions de sous-produits (M ; M1, M2, M3) sont ajoutées en premier et le combustible solide et le liant organique sont ajoutés ultérieurement.

fig. 1

Binders

| M1 | M2 | M3 | | Carbon | Cement | Starch | White slag |

%Fe$^{2+}$_M1;
%Fe$^{3+}$_M1;
%Fe$^{0}$_M1

%Fe$^{2+}$_M2;
%Fe$^{3+}$_M2;
%Fe$^{0}$_M2

%Fe$^{2+}$_M3;
%Fe$^{3+}$_M3;
%Fe$^{0}$_M3

Fe$^{2+}$_tot;
Fe$^{3+}$_tot;
Fe$^{0}$_tot

Waste not to size

Screening

Sequential dosing

Water → Mixing ← Breaking of agglomerates not to size

ZB

Cold agglomeration

SB

Screening → Recycling of agglomerates not to size

Curing

B

fig. 2

M1, M2, M3 → Dry additives → Hygroscopic additives → Water

fig. 3

**EP 4 278 019 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020065691 A1
- US 2001047699 A1

- RU 2183679 C1